# EUROPEAN PATENT SPECIFICATION

(11) **EP 0 405 900 B1**
(45) Date of publication and mention of the grant of the patent: **04.09.1996**
(21) Application number: 90306951.6
(22) Date of filing: 26.06.1990
(51) Int. Cl.: G11B 5/29

(54) **Methods of manufacturing magnetic heads**
Verfahren zur Herstellung von Magnetköpfen
Méthodes pour fabriquer des têtes magnétiques

(30) Priority: 27.06.1989 JP 164556/89
(43) Date of publication of application: 02.01.1991
(73) Proprietor: SONY CORPORATION, Tokyo 141 (JP)
(72) Inventor: Nanjyo, Shinichi, c/o Patents Division, Shinagawa-ku, Tokyo 141 (JP); Yamazaki, Masahiko, c/o Patents Division, Shinagawa-ku, Tokyo 141 (JP)
(74) Representative: Cotter, Ivan John

(56) References cited:
- EP-A- 0 060 977
- PATENT ABSTRACTS OF JAPAN vol. 9, no. 182 (P-376) 27 July 1985
- PATENT ABSTRACTS OF JAPAN vol. 8, no. 237 (P-310) 30 October 1984

## Description

This invention relates to methods of manufacturing magnetic heads. Such magnetic heads may, for example, be used to perform a frame recording operation in an electronic still camera or the like.

In a magnetic head for use in an electronic still camera to record frames of still images on a video floppy disc, the track-to-track interval is as small as 40 µm, for attaining a high recording density, so extreme precision is required. For a magnetic head having a frame recording capability, it has been customary to employ a thin film type where magnetic gaps are arrayed in a straight line on one substrate. Since two channels in such a thin-film type magnetic head are formed simultaneously on a single substrate by the thin film forming technique, the advantage is achieved that a satisfactory in-line accuracy can be ensured between the two-channel gaps, and the electromagnetic characteristics are rendered uniform. Accordingly, no phase deviation occurs between the magnetic gaps, and any loss resulting from phase deviation between recorded and reproduced signals can be eliminated. Furthermore, due to the application of a high-precision thin film forming technique, the dimensional precision is retained, and a narrow track interval can be realized.

However, with such a thin-film type magnetic head, there are problems. Namely, the production cost is high because of the high precision thin film forming process, and the steps thereof are complicated which further increases the cost.

In an attempt to solve the above problems, it has been proposed to use a bulk-type magnetic head, which can be produced at a lower cost. With this type, however, there is difficulty in arraying the magnetic gaps of individual head elements in a straight line with a high precision, so that the problems of in-line error and phase deviation occur. Moreover, it is necessary in the bulk-type magnetic head to wind coils therein, which involves a problem with the coil winding space, and difficulty in realising a narrow track structure.

Japanese laid-open patent specification 63/231711 discloses a magnetic head proposed for solving the above problems. In this magnetic head, track-width limit grooves are formed in one magnetic core half or block to shape two magnetic-gap forming surfaces on a single plane, and the other magnetic core halves, prepared individually with coil grooves formed therein, are joined to each other in such a manner that the respective magnetic-gap forming surfaces are mutually connected, thereby producing a two-channel magnetic head.

In the magnetic head thus produced, the magnetic gaps are formed on a single plane, so that the in-line precision of the gaps can be enhanced. Moreover, since the mutually confronting portions of the other magnetic core halves with coil grooves formed therein are inclined in the direction to recede from each other, a wide interval can be obtained between the mutually confronting magnetic core halves, consequently to ensure a sufficient space for winding coils in the grooves.

However, in this magnetic head where the magnetic core halves on one side are joined to each other, the characteristic is deteriorated. In addition, although a sufficient space can be ensured for winding coils, the coil grooves exist in the same direction, and therefore the coil winding operation is somewhat intricate and difficult.

Patent Abstract corresponding to JP-A-60052911 discloses a method of producing a multi-track magnetic head by providing cut grooves in two magnetic core blocks, each of which core blocks is formed of two parts separated by a magnetic gap, to give two comb like components, interleaving the components so that the magnetic gaps are set on a straight line and providing windings on the components through windows therein to form a magnetic head.

According to the invention there is provided a method of manufacturing a magnetic head formed of two head elements having aligned gaps comprising the steps of:
joining first magnetic core blocks, where track-width limit slots and coil grooves orthogonal thereto are formed in butt surfaces to second magnetic core blocks where track-width limit slots to be opposed to those in said first magnetic core blocks are formed in butt surfaces, said second magnetic core blocks being shorter than said first magnetic core blocks in the direction in which the said track-width limit slots extend;
cutting said second magnetic core blocks in such a manner that the thickness of at least the portions thereof opposed to the coil grooves in said first magnetic core blocks become smaller than the depth of said coil grooves;
slitting and comb-toothing said joined first and second magnetic core blocks so that at least said second magnetic core blocks are divided and said first magnetic core blocks are partially left uncut to serve as coupling portions, thereby producing a pair of head element couplers having comb-toothed portions attached thereto; and
joining said pair of element couplers to each other in a state where the comb-toothed portion of one head element coupler are inserted into the slits in the other head element coupler while the respective butt surfaces of said first magnetic core blocks are butted to each other; characterised by
cutting the comb-toothed portions to form the magnetic head attached to the head element couplers; and
severing at least the coupling portions of said first magnetic core blocks and thereby dividing the same into individual magnetic heads.

Thus, a pair of magnetic core blocks with magnetic gaps formed in butt surfaces thereof are slit and comb-toothed to produce a pair of head element couplers, and the element couplers so obtained are joined to each other in a state where the comb-toothed portions of one coupler are inserted into the slits in the other coupler, while the respective coupling portions are butted to each other, whereby the in-line precision of the magnetic gaps can be enhanced.

The invention will now be described by way of example with reference to the accompanying drawings, throughout which like parts are referred to by like references, and in which:
Figures 1 to 6 are enlarged perspective views showing sequential steps in a method according to the present invention of manufacturing a magnetic head; in which:
Figure 1 shows a step of joining first and second magnetic core blocks together;
Figure 2 shows a step of cutting the second magnetic core blocks opposed to coil grooves;
Figure 3 shows a step of producing head element couplers;
Figure 4 shows a step of joining the pair of head element couplers to each other;
Figure 5 shows a step of determining the widths of comb-toothed portions; and
Figure 6 shows a step of severing the coupling portions of magnetic core blocks;
Figure 7 is an enlarged perspective view of components of the magnetic head produced;
Figure 8 is an enlarged side view of the components shown in Figure 7;
Figure 9 is an enlarged plan view seen from the recording-medium slide surfaces; and
Figure 10 is an enlarged perspective view of the magnetic head.

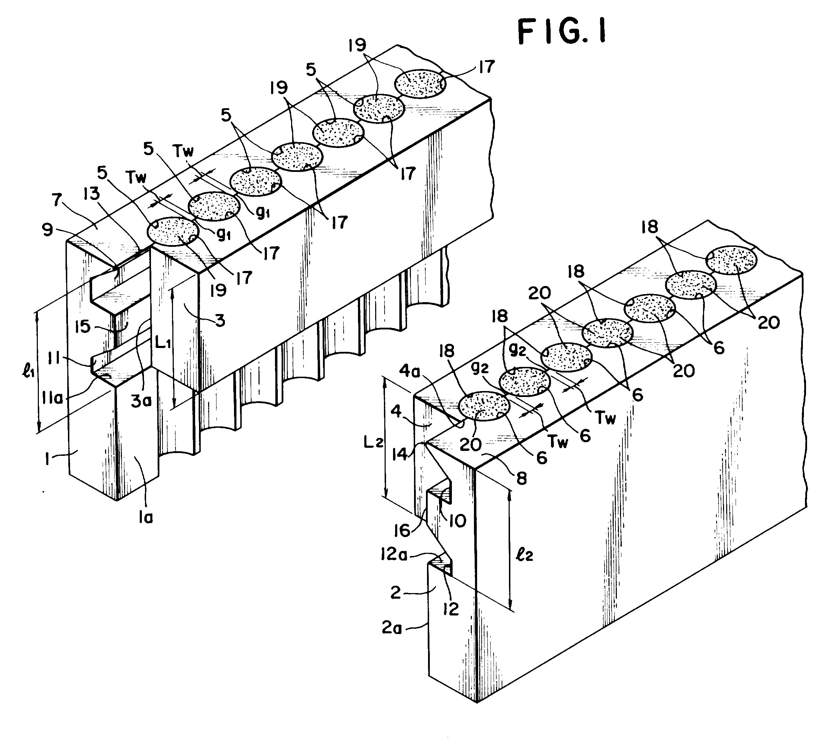

Referring to Figure 1, there are initially prepared two first magnetic core blocks 1 and 2, and two second magnetic core blocks 3 and 4, having mutually different lengths. The magnetic core block 1 to 4 are composed of an oxide magnetic material such as Mn-Zn ferrite or Ni-Zn ferrite.

In this example, the lengths L1 and L2 of the second magnetic core blocks 3 and 4 are set to be substantially equal to distances 11 and 12 from recording-medium slide surfaces 7 and 8 of the first magnetic core blocks 1 and 2 to rear lateral surfaces 11a and 12a of undermentioned glass grooves 11 and 12. Subsequently, a plurality of track-width limit slots 5 and 6 are formed longitudinally along surfaces 1a and 2a of the whole first magnetic core blocks 1 and 2 which are greater in length. In this stage, the slots 5 and 6 are so formed as to have predetermined intervals transversely.

As a result, the width of the butt surfaces 1a and 2a left partially in the first magnetic core blocks 1 and 2 is determined by the mutually adjacent track-width limit slots 5 and 6, thereby defining the track width Tw of each magnetic gap.

In the next step, coil grooves 9 and 10 are formed orthogonally to the track-width limit slots 5 and 6 in the entire blocks transversely in the vicinities of the recording-medium slide surfaces 7 and 8, and glass grooves 11 and 12 are formed adjacent thereto on the rear side in a manner to extend over the entire blocks transversely. Such coil grooves 9 and 10 and glass grooves 11 and 12 are cut to be substantially trapezoidal in sectional shape. Particularly the coil grooves 9 and 10 serve to determine the depth of the magnetic gap which will be described later.

As a result, the flat portions between the recording-medium slide surfaces 7 and 8, and the coil grooves 9 and 10 are used as front gap forming planes 13 and 14, and the flat portions between the coil grooves 9 and 10 and the glass grooves 11 and 12 are used as back gap forming planes 15 and 16.

Meanwhile in butt surfaces 3a and 4a of the second magnetic core blocks 3 and 4 to be opposed to the butt surfaces 1a and 2a of the first magnetic core blocks 1 and 2, a plurality of track-width limit slots 17 and 18 for determining the track width Tw are formed longitudinally over the entire blocks in such a manner as to confront the track-width limit slots 5 and 6 formed previously in the first magnetic core blocks 1 and 2.

Although the track-width limit slots 5, 6, 17 and 18 in this example are shaped to be substantially arcuate, they may be sectionally V or any other suitable shape in conformity with the required characteristics of the magnetic head.

Next, the first magnetic core blocks 1 and 2 and the second magnetic core blocks 3 and 4 are butted to each other with the tracks being positioned. In this stage, it is necessary that a gap film of a predetermined gap length exist between the butt surfaces 1a and 2a of the first magnetic core blocks 1 and 2, and the butt surfaces 1 and 2, and the butt surfaces 3a and 4a of the second magnetic core blocks 3 and 4. When such gap film is formed by the use of a welding glass material, the butting is executed while interposing between the surfaces a gap spacer or the like which corresponds to the desired gap length. In case the gap film is composed of a thin film, first the front gap forming planes 13 and 14 are polished to be specular, and then a non-magnetic material such as SiO₂, Ta₂O₅, ZrO₂, Cr or Be-Cu alloy is deposited by the technique of vacuum thin film forming in a manner to reach the desired gap length.

In this example, the second magnetic core blocks 3 and 4 are mutually so butted as partially to leave the butt surfaces 1a and 2a of the first magnetic core blocks 1 and 2 in the vicinities of the two ends, thereby facilitating the operation for butting a pair of head element couplers which will be described later.

Subsequently, the spaces between the opposed track-width limit slots 5, 6, 17 and 18 are filled with welding glass materials 19 and 20, whereby the first magnetic core blocks 1 and 2, and the second magnetic core blocks 3 and 4, are joined together respectively.

Consequently, magnetic gaps g1 and g2 each having a track width Tw are formed between the track-width limit slots 5, 6, 16 and 17.

The welding glass fillers 19 and 20 need to have adequate properties which are capable of ensuring a sufficient joining strength between the first magnetic core blocks 1 and 2, and the second magnetic core blocks 3 and 4, while minimizing the bubbles generated during the welding step, and still maintaining a high reliability with minimum corrosion and so forth to the first and second magnetic core blocks 1 to 4.

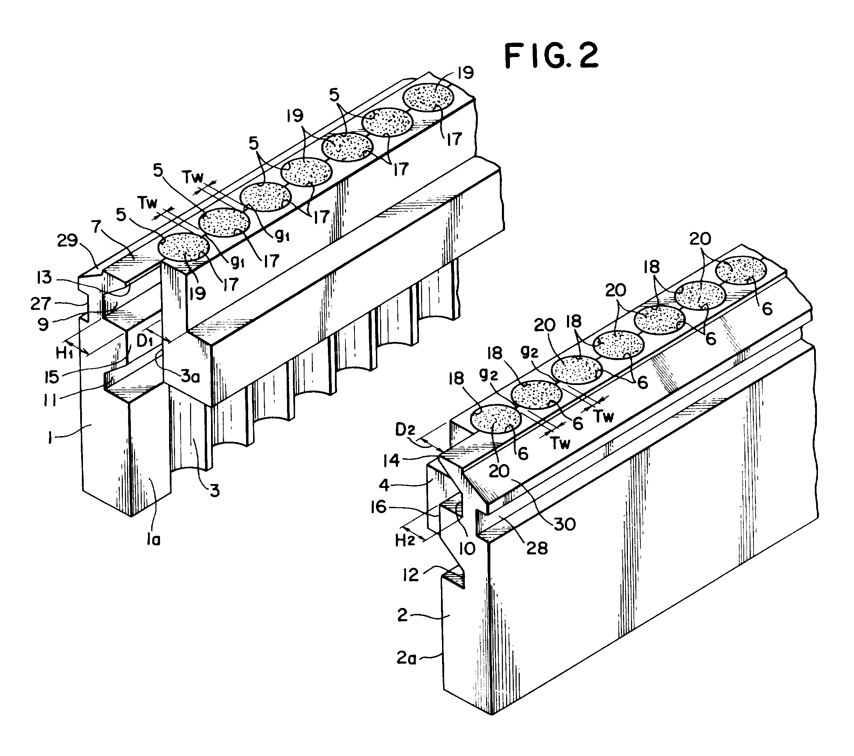

In the next step, as shown in Figure 2, the second magnetic core blocks 3 and 4 are cut off at least in the portions opposed to the coil grooves 9 and 10 formed in the first magnetic core blocks 1 and 2. Then the second magnetic core blocks 3 and 4 are so cut that the thicknesses D1 and D2 thereof become smaller than the depths H1 and H2 of the coil grooves 9 and 10.

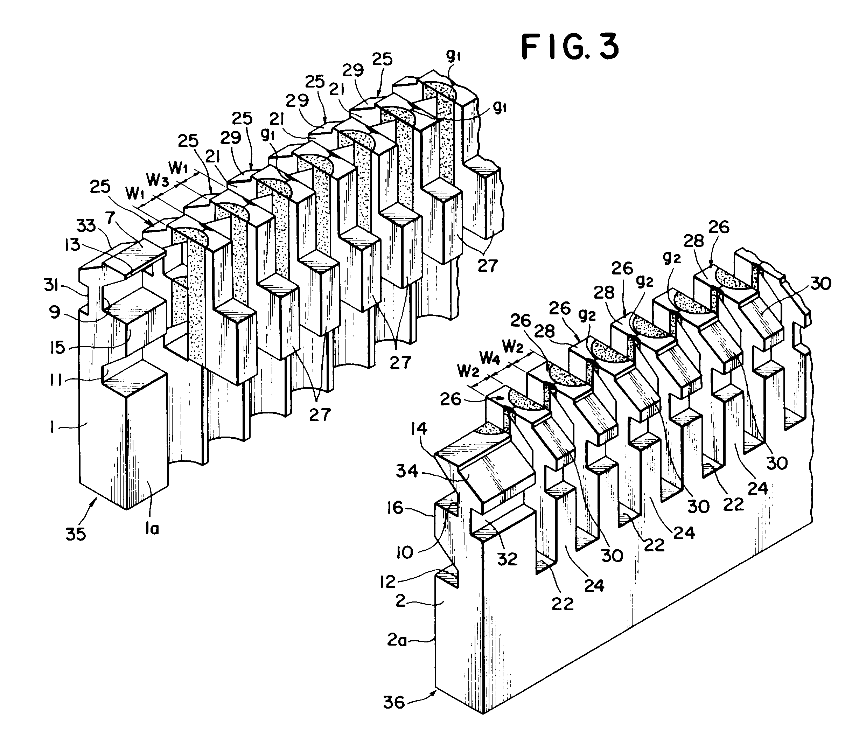

Next, as shown in Figure 3, the first and second magnetic core blocks 1 to 4 thus joined are so machined that slits 21 and 22 extend longitudinally, whereby the pairs of blocks are shaped like comb teeth. The slits 21 and 22 are formed to have predetermined intervals transversely.

In this stage, the slits 21 and 22 are formed at least to the positions where the second magnetic core blocks 3 and 4 are divided, and the first magnetic core blocks 1 and 2 are partially left uncut to serve as coupling portions 23 and 24, wherein the widths W1 and W2 of the comb-toothed portions 25 and 26 left between the slits 21 and 22 are smaller than the widths W3 and W4 of the slits 21 and 22.

As a result, the second magnetic core blocks 3 and 4 are divided and comb-toothed by the slits 21 and 22 consequently to become magnetic cores 27 and 28 which partially constitute magnetic head elements on one side. Meanwhile the first magnetic core blocks 1 and 2 are also comb-toothed by the slits 21 and 22 consequently to become magnetic cores 29 and 30 which partially constitute magnetic head elements on the other side. That is, the comb-toothed portions 25 and 26 are used as magnetic head elements, wherein closed magnetic paths having predetermined magnetic gaps g1 and g2 are formed by the magnetic cores 27 to 30.

In this example, the slits 21 and 22 are cut to positions deeper than the rear lateral surfaces 11a and 12a of the glass grooves 11 and 12.

Subsequently, on the reverse side with respect to the coil grooves 9 and 10 in the first magnetic core blocks 1 and 2, auxiliary coil grooves 31 and 32 are formed at positions corresponding to the coil grooves 9 and 10, so that coils can be wound with facility.

To determine the width of contact with the recording medium, the recording-medium slide surfaces 7 and 8 of the first magnetic core blocks 1 and 2 are partially inclined to form oblique surfaces 33 and 34.

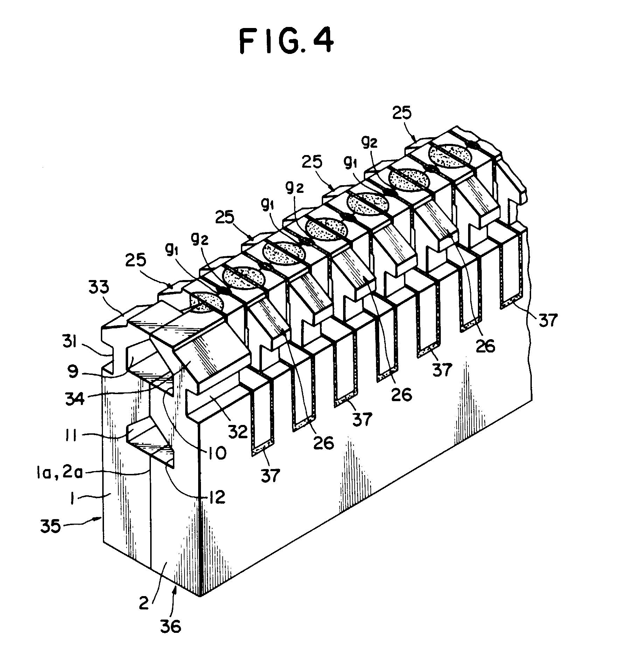

In the next step, a pair of comb-toothed head element couplers 35 and 36 are so disposed that, as illustrated in Figure 4, the comb-toothed portions 25 of one head element coupler 35 are alternately inserted into the slits 22 in the other head element coupler 36. In this stage, such insertion is executed up to the positions where, in the head element couplers 35 and 36, the butt surfaces la and 2a of the coupling portions 23 and 24 of the first magnetic core blocks 1 and 2 without joint of the second magnetic core blocks 3 and 4 thereto are butted to each other.

Therefore, simultaneously with mutual setting of the butt surfaces la and 2a of the first magnetic core blocks 1 and 2, the magnetic gaps g1 and g2 formed in the comb-toothed portions 25 and 26 are aligned straight in the direction of the track width on the butt surfaces 1a and 2a. That is, in the step of butting such head element couplers 35 and 36, the butt surfaces 1a and 2a of the coupling portions 23 and 24 of the first magnetic core blocks 1 and 2 serve to determine the relative positions between the comb-toothed portions 25 of one head element coupler 35 and the comb-toothed portions 26 of the other head element coupler 36. In this stage, since the magnetic gap forming planes in the comb-toothed portions 25 and 26 are flush with the butt surfaces 1a and 2a of the coupling portions 23 and 24, it follows that the magnetic gaps g1 and g2 of the comb-toothed portions 25 and 26 can be aligned by rendering the butt surfaces 1a and 2a of the coupling portions 23 and 24 coincident with each other. Therefore it becomes possible to prevent any phase deviation between the magnetic gaps g1 and g2 while eliminating any loss derived from the phase deviation of recorded and reproduced signals.

Subsequently the pair of head element couplers 35 and 36 are joined to each other in such a state by the use of welding glass material 37.

As a result, there is obtained a multi-track magnetic head where a plurality of magnetic gaps are arrayed in a straight line. It is a matter of course that the above is actually usable as a multi-track magnetic head wherein coils are wound therein.

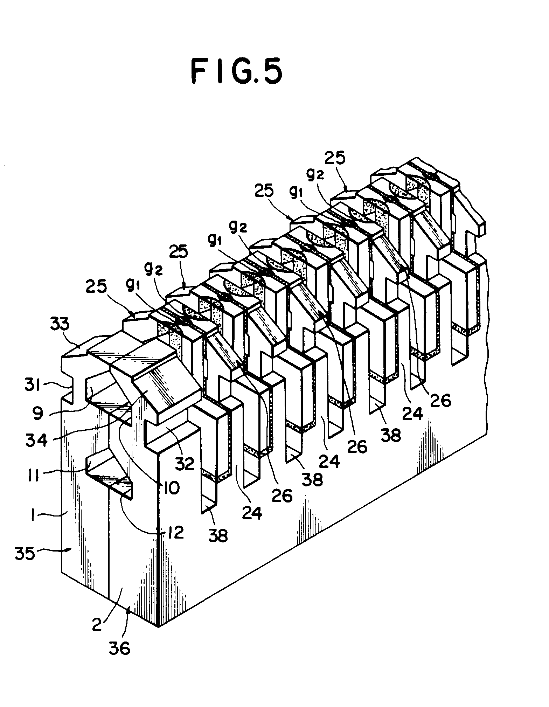

Next, as shown in Figure 5, the comb-toothed portions 25 and 26 of the head element couplers 35 and 36 are so cut as to have predetermined widths W1 and W2 in the direction of the track width. In this stage, the cutting is executed in such a manner that slits 38 extend up to positions deeper than the magnetic cores 26 and 27 on the aforementioned one side.

In this embodiment, the comb-toothed portions 25 and 26 are so shaped in this stage as to have predetermined widths in the direction of the track width. However, the comb-toothed portions 25 and 26 may be previously shaped in the step of Figure 3 to have the widths W1 and W2.

Finally the coupling portions 23 and 24 of the first magnetic core blocks 1 and 2 of the joined head element couplers 35 and 36 are severed in the longitudinal direction thereof over the entire blocks.

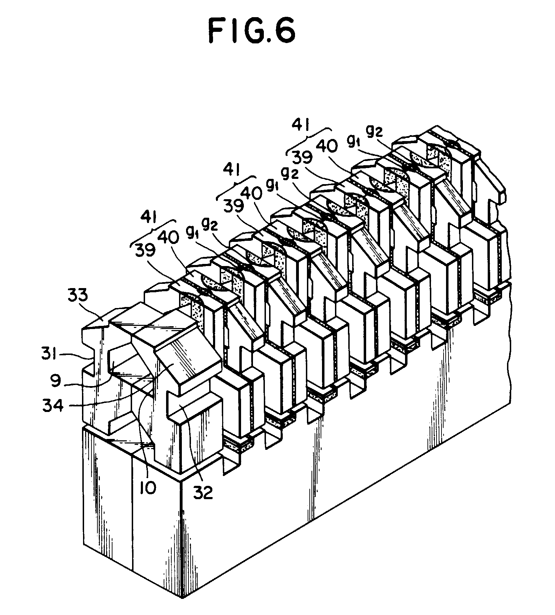

Consequently, as shown in Figure 6, there are obtained a plurality of divided magnetic head elements 39 and 40 where the comb-toothed portions 25 of one head element coupler 35 and the comb-toothed portions 26 of the other head element coupler 36 are joined together with the welding glass 37. That is, each pair of the joined magnetic head elements 39 and 40 form a magnetic head 41 having two tracks.

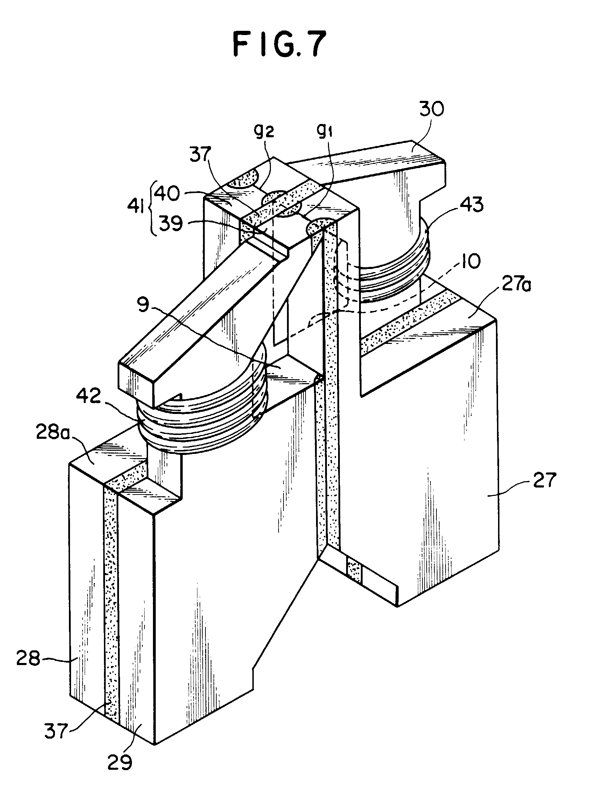

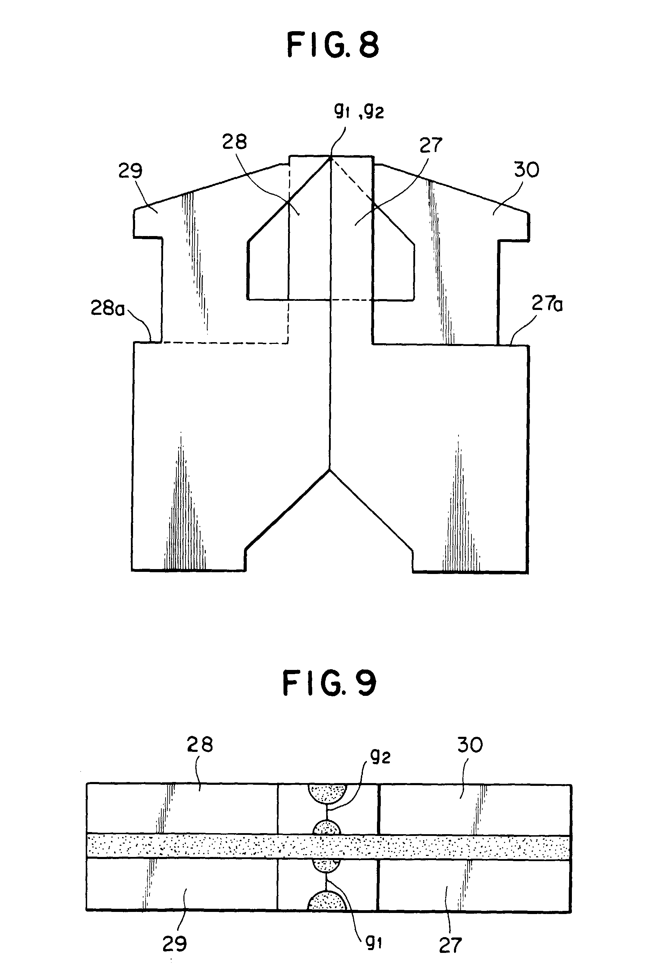

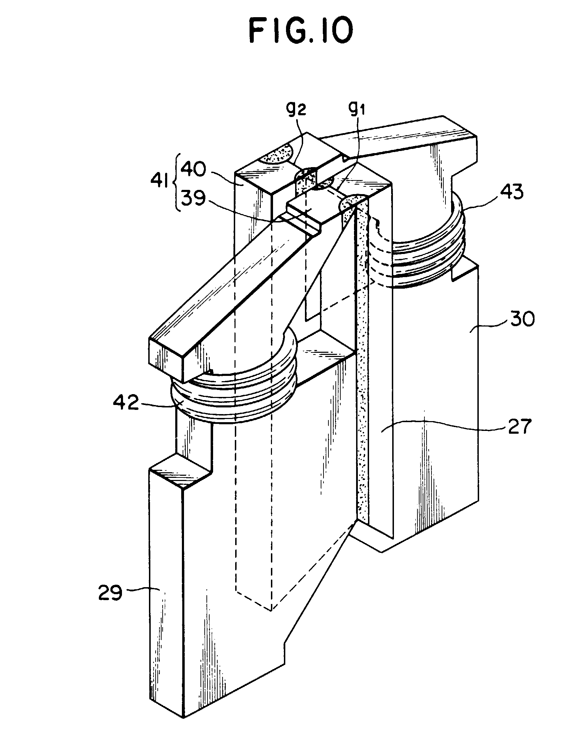

In the magnetic head 41 thus produced, as shown in Figures 7 to 9, the magnetic gaps g1 and g2 formed on the recording-medium slide surfaces 7 and 8 of the magnetic head elements 39 and 40 are aligned straight in the direction of the track width with high precision, and the coil grooves 9 and 10 of the magnetic head elements 39 and 40 are disposed on the mutually reverse sides with the magnetic gaps g1 and g2 positioned therebetween. Accordingly, there exists neither an in-line error of the magnetic gaps g1 and g2 nor a phase deviation between the gaps g1 and g2, whereby any loss derived from the phase deviation of recorded and reproduced signals can be eliminated. Furthermore, the coil grooves 9 and 10 are disposed on the mutually reverse sides with the magnetic gaps g1 and g2 positioned therebetween, and the magnetic cores 27 and 28 opposed respectively to the coil grooves 9 and 10 are partially open, so that the spaces required for winding coils in the grooves 9 and 10 can be ensured to facilitate the winding operation. Thus, it becomes possible to narrow the interval of the magnetic head elements 39 and 40 in the track-width direction without being restricted by the operation of winding the coils 42 and 43.

In the magnetic head 41, stepped portions 27a and 28a of the magnetic cores 27 and 28 on one side opposed to the coil grooves 9 and 10 may be cut off as illustrated in Figure 10 to reduce the area of confrontation to the magnetic cores 29 and 30 on the other side, thereby improving the cross-talk characteristics.

Thus, as described, a pair of magnetic head elements so slit as to be comb-toothed are joined to each other in a state where the butt surfaces of the magnetic core blocks are butted to each other in a manner that the comb-toothed portions of one head element coupler are inserted into the slits in the other head element coupler. Therefore, the magnetic gaps are aligned straight in the direction of the track width consequently to prevent any in-line error or any phase deviation between the magnetic gaps. Thus, it becomes possible to eliminate the loss derived from the phase deviation of recorded and reproduced signals.

In addition, the coil grooves are disposed on the mutually reverse sides with the magnetic gaps positioned therebetween, and the thickness of the magnetic core block portion confronting the coil groove is set to be smaller than the depth of the coil groove, hence ensuring a sufficient winding space for the coil while realizing a narrow track interval.

Moreover, two individually independent magnetic head elements are joined to each other by the use of welding glass, thereby enhancing the cross-talk characteristics.

Consequently, an improved bulk-type magnetic head can be provided wherein a high in-line precision of magnetic gaps and a narrow track structure can be achieved while sufficient coil winding spaces are maintained, with further advantages including enhanced cross-talk characteristics and lower production cost.

## Claims

1. A method of manufacturing a magnetic head (41) formed of two head elements (39,40) having aligned gaps (g1,g2) comprising the steps of: joining first magnetic core blocks (1, 2), where track-width limit slots (5, 6) and coil grooves (9, 10) orthogonal thereto are formed in butt surfaces (1a, 2a) to second magnetic core blocks (3, 4) where track-width limit slots (17, 18) to be opposed to those in said first magnetic core blocks (1, 2) are formed in butt surfaces (3a, 4a), said second magnetic core blocks (3, 4) being shorter than said first magnetic core blocks (1, 2) in the direction in which the said track-width limit slots (5, 6) extend;
cutting said second magnetic core blocks (3, 4) in such a manner that the thickness of at least the portions thereof opposed to the coil grooves (9, 10) in said first magnetic core blocks (1, 2) become smaller than the depth of said coil grooves (9, 10);
slitting (21,22) and comb-toothing said joined first and second magnetic core blocks (1 to 4) so that at least said second magnetic core blocks (3, 4) are divided and said first magnetic core blocks (1, 2) are partially left uncut to serve as coupling portions, thereby producing a pair of head element couplers (35, 36) having comb-toothed portions (25,26) attached thereto; and
joining said pair of element couplers (35, 36) to each other in a state where the comb-toothed portion (25,26) of one head element coupler (35, 36) are inserted into the slits (21,22) in the other head element coupler (35, 36) while the respective butt surfaces (1a, 2a) of said first magnetic core blocks (1, 2) are butted to each other;
characterised by
cutting the comb-toothed portions (25,26) to form the magnetic head (41) attached to the head element couplers (35,36); and
severing at least the coupling portions of said first magnetic core blocks (1, 2) and thereby dividing the same into individual magnetic heads (41).

## Patentansprüche

1. Verfahren zur Herstellung eines aus zwei Kopfelementen (39, 40) gebildeten Magnetkopfes (41) mit fluchtenden Spalten (g1, g2), das folgende Schritte aufweist: Aneinanderfügen erster magnetischer Spulenkernblöcke (1, 2), wo Spurweitenbegrenzungsschlitze (5, 6) und dazu orthogonale Spulennuten (9, 10) in stumpf aneinander stoßenden Oberflächen (1a, 2a) zu zweiten magnetischen Spulenkernblöcken (3, 4) ausgebildet werden, wo Spurweitenbegrenzungsschlitze (17, 18), die solchen in den ersten besagten magnetischen Spulenkernblöcken (1, 2) gegenüberliegen sollen, in stumpf aneinander stoßenden Oberflächen (3a, 4a) ausgebildet sind, wobei die besagten zweiten magnetischen Spulenkernblöcke (3, 4) kürzer sind als die ersten magnetischen Spulenkemblöcke (1, 2) in der Richtung, in der sich die Spurweitenbegrenzungsschlitze (5, 6) erstrecken;
Schneiden der zweiten magnetischen Spulenkemblöcke (3, 4) derart, daß die Stärke von zumindest den den Spulennuten (9, 10) gegenüberliegenden Teilen in den ersten magnetischen Spulenkernblöcken (1, 2) kleiner werden als die Tiefe der Spulennuten (9, 10);
Längsschneiden (21, 22) und kammartiges Verzahnen der aneinandergefügten ersten und zweiten magnetischen Spulenkernblöcke (1 - 4), so daß zumindest die zweiten magnetischen Spulenkemblöcke (3, 4) getrennt sind und daß die ersten magnetischen Spulenkernblöcke (1, 2) teilweise ungeschnitten verbleiben, um als Kopplungsteile zu dienen, womit sie ein Paar von Kopfelementkopplern (35, 36) erzeugen mit damit verbundenen kammartig verzahnten Teilen (25, 26); und
gegenseitiges Aneinanderfügen des Paares von Elementkopplern (35, 36) in einem Zustand, wo die kammartig verzahnten Teile (25, 26) von einem Kopfelementkoppler (35, 36) in die Schlitze (21, 22) in dem anderen Kopfelementkoppler (35, 36) eingeführt sind, während die entsprechenden stumpfen Oberflächen (1a, 2a) der ersten magnetischen Spulenkernblöcke (1, 2) stumpf aneinandergefügt sind;
**gekennzeichnet durch**
Schneiden der kammartig verzahnten Teile (25, 26), um den mit den Kopfelementkopplern (35, 36) verbundenen magnetischen Kopf (41) auszubilden; und
Trennen zumindest der Kopplungsteile der ersten magnetischen Spulenkernblöcke (1, 2) und damit Teilen derselben in einzelne magnetische Köpfe (41).

## Revendications

1. Procédé de fabrication d'une tête magnétique (41) formée de deux éléments (39, 40) de tête ayant des entrefers alignés (g1, g2), comprenant les étapes suivantes :
le raccordement de premiers blocs (1, 2) de noyau magnétique, dans lesquels des fentes (5, 6) de limitation de largeur de piste et des gorges (9, 10) d'enroulements qui leur sont perpendiculaires sont formées dans des surfaces de butée (1a, 2a), à des seconds blocs (3, 4) de noyau magnétique dans lesquels des fentes (17, 18) de limitation de largeur de piste destinées à être placées en face de celles des premiers blocs (1, 2) de noyau magnétique sont formées dans des surfaces de butée (3a, 4a), les seconds blocs (3, 4) de noyau magnétique étant plus courts que les premiers blocs (1, 2) de noyau magnétique dans la direction dans laquelle sont disposées les fentes (5, 6) de limitation de largeur pistes,
la découpe des seconds blocs (3, 4) de noyau magnétique de manière que l'épaisseur de leurs parties opposées aux gorges (9, 10) d'enroulements formées dans les premiers blocs (1, 2) de noyau magnétique au moins soit plus petite que la profondeur des gorges (9, 10) d'enroulements,
la formation de fentes (21, 22) et de dents de peigne dans les premiers et seconds blocs (1 à 4) de noyau magnétique qui sont raccordés afin que les seconds blocs (3, 4) de noyau magnétique au moins soient divisés et que les premiers blocs (1, 2) de noyau magnétique restent partiellement sans découpe afin qu'ils soient utilisés comme parties de couplage, si bien qu'une paire de coupleurs (35, 36) d'éléments de tête est formée avec des parties (25, 26) de dents de peigne qui lui sont fixées, et
le raccordement des deux coupleurs (35, 36) d'éléments l'un à l'autre dans un état dans lequel la partie en dents de peigne (25, 26) d'un premier coupleur (35, 36) d'éléments de tête pénètre dans les fentes (21, 22) de l'autre coupleur (35, 36) d'éléments de tête alors que les surfaces respectives de butée (1a, 2a) des premiers blocs (1, 2) de noyau magnétique sont en butée,
caractérisé par :
la découpe des parties (25, 26) en dents de peigne pour la formation de la tête magnétique (41) fixée aux coupleurs (35, 36) d'éléments de tête, et
la séparation des parties de couplage au moins des premiers blocs (1, 2) de noyau magnétique et ainsi la division de ces blocs en têtes magnétiques individuelles (41).
